(19) Europäisches Patentamt
European Patent Office
Office européen des brevets

(11) Veröffentlichungsnummer : **0 061 668**
**B1**

(12) **EUROPÄISCHE PATENTSCHRIFT**

(45) Veröffentlichungstag der Patentschrift : **05.06.85**

(51) Int. Cl.⁴ : **C 08 G 65/32**, C 08 G 65/20

(21) Anmeldenummer : **82102268.8**

(22) Anmeldetag : **19.03.82**

# (54) Verfahren zur Herstellung von Polytetramethylenether-glykol oder -glykoldiester mit niedriger Farbzahl.

(30) Priorität : **27.03.81 DE 3112065**

(43) Veröffentlichungstag der Anmeldung : **06.10.82 Patentblatt 82/40**

(45) Bekanntmachung des Hinweises auf die Patenterteilung : **05.06.85 Patentblatt 85/23**

(84) Benannte Vertragsstaaten : **BE DE FR GB IT NL**

(56) Entgegenhaltungen :
**DE-A- 1 520 441**
**CHEMICAL ABSTRACTS, Band 89, Nr. 8, August 1979, Seite 33, Zusammenfassung 60511q, Columbus, Ohio, US**

(73) Patentinhaber : **BASF Aktiengesellschaft**
**Carl-Bosch-Strasse 38**
**D-6700 Ludwigshafen (DE)**

(72) Erfinder : **Mueller, Herbert, Dr.**
**Carostrasse 53**
**D-6710 Frankenthal (DE)**

**EP 0 061 668 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Polymerisation des Tetrahydrofurans (THF) mit Hilfe von Oxoniumionen als Katalysatoren ist durch die grundlegenden Arbeiten von H. Meerwein und Mitarbeitern (Angew. Chemie *72* (1960), 927) allgemein bekannt geworden.

Als Katalysatoren werden entweder vorgebildete Verbindungen oder solche, die *in situ* erzeugt werden, eingesetzt. Beschrieben werden z. B. folgende vorgebildete Trialkyloxoniumsalze als Katalysatoren

$$[(C_2H_5)_3O]\ SbCl_6\ ;\ [(C_2H_5)_3O]\ BF_4$$
$$[(C_2H_5)_3O]\ FeCl_4\ ;\ [(C_2H_5)_3O]\ AlCl_4$$

Geeignete Komponenten, die im Reaktionsmedium Oxomiumionen bilden, sind vor allem Lewis-Säuren, wie $BF_3$, $AlCl_3$, $SnCl_4$, $SbCl_5$, $FeCl_3$ oder $BF_3$, die zusammen mit Ethylenoxid, Propylenoxid, Epichlorhydrin, ortho-Estern und Acetalen, α-Chlorether, Benzylchlorid, Triphenylmethylchlorid Acetylchlorid oder β-Propiolacton verwendet werden können sowie anorganische Wasserstoffsäuren, wie $HClO_4$, $HBF_4$, $HSO_3F$, $HSO_3Cl$, $H_2SnCl_6$, $HIO_3$, $HSbCl_6$ oder $HFeCl_4$, die zusammen mit Carbonsäureanhydriden, Carbonsäurechloriden, $SOCl_2$, $POCl_3$ und Benzolsulfonsäurechlorid eingesetzt werden können, sowie schließlich in neuerer Zeit auch Aluminiumalkyl-Verbindungen in Kombination mit Epichlorhydrin oder Wasser.

Aus dieser Aufstellung, die keineswegs den Anspruch auf Vollständigkeit erhebt, sondern nur die wichtigsten bisher bekannten Systeme beschreibt, wird deutlich, daß es eine unübersichtliche Vielfalt von Katalysatoren gibt, mit denen Polytetramethylenether-glykol (PTHF) oder die entsprechenden-diester hergestellt werden können. Technische Bedeutung haben aber nur einige wenige Katalysatoren erlangt, da nur sie es gestatten, Polymerisate zu erzeugen, die vom chemischen und physikalischen Eigenschaftsbild her den Markterfordernissen entsprechen. Ein Nachteil dieser Katalysatoren ist es, daß sie im allgemeinen ein Polymerisat liefern, das leichte bis starke Gelb- oder Brauntönung aufweist. Die Verfärbung der Polymerisate ist umso tiefer je höher die Temperatur gewählt wurde, bei der Tetrahydrofuran polymerisiert wurde.

Tetrahydrofuran technischer Qualität enthält geringe Mengen an Verunreinigungen in einer Konzentration von 10 bis 500 ppm. Die chemische Natur dieser Verunreinigungen ist nicht in allen Einzelheiten bekannt. Obwohl dieses Tetrahydrofuran technischer Qualität an sich von sehr hoher Reinheit ist — es hat normalerweise einen Reinheitsgrad von $> 99{,}9\ \%$ —, verursachen offensichtlich diese Spurenverunreinigungen bei der Polymerisation die obengenannten Verfärbungen. Darüber hinaus beobachtet man gleichzeitig mit der Verfärbung eine veränderte Reaktionsfähigkeit bei der Herstellung von Polyestern oder Polyurethanen aus dem Polytetramethylenether-glykol. Andererseits sind jedoch Farbe und reproduzierbare Verarbeitung wichtige Eigenschaften für ein Polymerisat, das technische Anwendung finden soll.

In den US-Patentschriften 3 980 672, 3 935 252 und 2 751 419 sowie in der DE-OS 28 01 792 (US 4 189 566) sind Behandlungsmethoden beschrieben worden, um technisches Tetrahydrofuran durch Vorbehandlung mit zeolithischen Molekularsieben, starken Mineralsäuren, organischen Sulfonsäuren, Silikagel oder Bleicherden in ein polymerisationsfähiges Monomeres umzuwandeln. Während die in den US-Anmeldungen beschriebene Behandlung im wesentlichen bewirkt, daß die erhaltenen Polymerisate keine nicht zu entfernende Restsäurezahl aufweisen, gelingt es durch die in der DE-OS 28 01 792 beschriebene Bleicherdebehandlung, Polymerisate mit verbesserter Farbzahl zu erhalten. Es hat sich jedoch herausgestellt, daß diese Behandlungsmethoden nicht in jedem Fall reproduzierbar für jede auf dem Markt erhältliche technische Qualität des Tetrahydrofurans angewendet werden kann. Die Verfahren nach den obengenannten US-Patentschriften weisen ferner den Nachteil auf, daß das nicht umgesetzte Tetrahydrofuran vor der Wiederverwendung sorgfältig getrocknet und gereinigt werden muß, da es einer Naßaufarbeitung des Polymerisates entstammt.

Offensichtlich gibt es unterschiedliche Verunreinigungen in dem cyclischen Ether. Da die Verunreinigungen in den meisten Fällen nicht genau identifiziert sind, kann durch analytische Methoden nicht in jedem Falle vorausgesagt werden, ob die Qualität des verwendeten Tetrahydrofurans für die Polymerisation geeignet ist. Deshalb kommt es immer wieder — trotz Vorbehandlung des Monomeren — zu nicht spezifikationsgerechten Polymerisaten.

Es bestand daher ein dringendes Bedürfnis, eine Behandlungsmethode für Polytetramethylenether-glykole oder deren Diester zu entwickeln, die es ermöglicht, alle im Polymerisat vorkommenden Verunreinigungen, die für die weitere Verarbeitung schädlich sind, zu entfernen. Diese Aufgabe wurde durch die vorliegende Erfindung zuverlässig gelöst.

Gegenstand der vorliegenden Erfindung ist daher ein Verfahren zur Herstellung von Polytetramethylenether-glykol oder -glykoldiester mit geringer Farbzahl, das dadurch gekennzeichnet ist, daß man die durch kationische Polymerisation von Tetrahydrofuran erhaltenen Polymerisate in Gegenwart eines Hydrierkatalysators einer Behandlung mit Wasserstoff unterwirft.

Unter Polymerisate im Sinne der Erfindung sind Polymere des Tetrahydrofurans mit Polymerisationsgraden größer als 2 zu verstehen. Eine geringe Farbzahl bedeutet, daß die Polytetramethylenether-glykole oder -glykoldiester nach der erfindungsgemäßen Behandlung eine HAZEN-Farbzahl (APHA-Verfahren) von beispielsweise kleiner als 40 HAZEN aufweisen. Die Bestimmung dieser Farbzahlen wird in den Normen DIN 53409 und ASTM-D-1209 beschrieben.

Das erfindungsgemäße Verfahren läßt sich auf alle Polymerisate, die durch kationische Polymerisation von zur Zeit handelsüblichen Qualitäten von Tetrahydrofuran erhalten werden, anwenden. Dabei spielt es keine Rolle, ob das Tetrahydrofuran auf der Basis von Acetylen und Formaldehyd, Maleinsäureanhydrid, Allylalkohol oder Butadien hergestellt wurde. In allen Fällen ließen sich Polytetramethylenether-glykole oder -glykoldiester mit Farbzahlen bis zu 10 APHA (nach DIN 53 409, Juli 1967) erhalten.

Erfindungsgemäß werden die Polymerisate in Gegenwart von üblichen Hydrierkatalysatoren mit Wasserstoff behandelt. Die primär vorhandene gelbliche oder bräunliche Farbe der Polymerisate verschwindet dann fast momentan und es entstehen farblose Produkte mit der Säurezahl null.

Dieses Ergebnis war umso überraschender, da bekannt ist, daß bei dem am meisten angewandten Herstellungsverfahren für Tetrahydrofuran eine Synthese vorgelagert ist, bei der unter sehr drastischen Reaktionsbedingungen (Temperaturen über 100 °C, Wasserstoffdruck größer als 200 bar) Butindiol hydriert wird. Da an keiner Reaktionsstufe eine Dehydrierung entweder des Monomeren oder Polymerisats angenommen werden kann, mußte angenommen werden, daß eine nachträgliche hydrierende Behandlung des Polymerisates wirkungslos bleibt. Gänzlich unvorhersehbar ist schließlich der Befund, daß die Säurezahl in den Polymerisaten durch die hydrierende Behandlung verschwindet.

Vorteilhaft ist außerdem, daß die apparativ aufwendige entfärbende Reinigung des Polymerisates mit Aktivkohle, beispielsweise entsprechend den Angaben der US-Patentschriften 3 935 252 oder 2 751 419, unterbleiben kann. Die erfindungsgemäße hydrierende Behandlung läuft unter unerwartet milden Bedingungen mit Erfolg ab, wobei die für die Entfärbung verbrauchte Wasserstoffmenge unmeßbar klein ist.

Erwähnt sei auch, daß es ein besonderer Vorzug des erfindungsgemäßen Verfahrens ist, daß nunmehr bei sehr viel höherer Temperatur als sonst üblich polymerisiert werden kann. Die Farbe der erhaltenen Polymerisate hängt nämlich u. a. auch von der gewählten Polymerisationstemperatur ab. Je höher man die Temperatur wählt, desto stärker verfärbte Produkte werden erhalten. Da es aber bei der Behandlung keine Rolle spielt, ob man ein mehr oder weniger gefärbtes Polymerisat der hydrierenden Behandlung unterwirft, kann man durch Einführung des erfindungsgemäßen Reinigungsverfahrens nun im allgemeinen bei höherer Temperatur polymerisieren. Dies wiederum bewirkt eine höhere Reaktionsgeschwindigkeit und Verengung der Molekulargewichtsverteilung im Polymerisat.

Wie oben bereits ausgeführt wurde, kann man Polytetramethylenether-glykol oder -glykoldiester mit den verschiedensten Initiatorsystemen herstellen. Diese Initiatorsysteme bestimmen die Endgruppen des primär erhaltenen Polymerisates. Technisch bedeutungsvoll sind Verfahren, die Polymerisate liefern, die verseifbare Endgruppen enthalten. Solche sind insbesondere Estergruppen von Carbonsäuren oder Sulfonsäuren. Da im Hauptanwendungsbereich des Polytetramethylenether-glykols nämlich dem Polyurethansektor — das Polymerisat mit Hydroxylendgruppen benötigt wird, werden die fluorsulfonsäure — bzw. carbonsäureestergruppenhaltigen Polymere in einer der Polymerisation nachfolgenden Stufe verseift. Es ist nun ein besonderer Vorzug des vorliegenden Verfahrens, daß die hydrierende Behandlung bereits an den Primärpolymerisaten vollzogen werden kann, so daß auch diese — falls benötigt — in farbloser reiner Form zugänglich sind. Man kann natürlich auch mit demselben Erfolg die Polymerisate in der Hydroxylform hydrierend behandeln.

Die erfindungsgemäße Behandlung der Polymerisate mit Wasserstoff in Gegenwart von Hydrierungskatalysatoren kann unter Normaldruck oder auch bei höheren Drücken, beispielsweise von 1 bis 300 bar, durchgeführt werden. Da die zusätzliche Druckanwendung gegenüber der drucklosen Arbeitsweise nur kaum meßbare Vorteile erbringt, wird vorzugsweise mit Drücken bis 60 bar, insbesondere 15 bis 50 bar Wasserstoff hydriert.

Die Wasserstoffbehandlung kann bei Raumtemperatur oder erhöhten Temperaturen, beispielsweise von 50° bis 150 °C durchgeführt werden. Doch auch hier kann festgestellt werden, daß diese Temperaturerhöhung gegenüber Hydriertemperaturen von 15 bis 70 °C, insbesondere 20 bis 60 °C keinen nennenswerten Vorteil bietet, so daß Hydriertemperaturen von 20 bis 60 °C bevorzugt angewendet werden.

Geeignete Hydrierkatalysatoren enthalten die Metalle der 8. Nebengruppe, insbesondere Nickel, Kobalt, Eisen sowie die Edelmetalle Ruthenium, Palladium oder Platin ferner Kupfer. Die Metalle können in reiner Form, z. B. als Raney-Metalle oder z. B. als reduzierte Oxide angewendet werden. Bewährt haben sich aber auch Katalysatoren, die die Hydriermetalle auf geeigneten Träger, wie Aluminiumoxid, Siliciumoxid, Bimsstein, Bentonit oder z. B. Magnesiumsilikat enthalten. Die Katalysatoren, welche unedle Metalle wie Eisen, Kobalt, Nickel und Kupfer enthalten, werden zweckmäßig vor der Anwendung durch Reduktion mit Wasserstoff in die aktive Form überführt. Bei der Anwendung von Edelmetallkatalysatoren erübrigt sich in den meisten Fällen eine solche Operation.

Für die Durchführung der hydrierenden Behandlung der Polymerisate zur Entfernung von Farbe und Reduzierung der Säurezahl wendet man die bei Hydrierungen übliche Technik an. Man arbeitet in der flüssigen Phase, wobei bei Festbettkatalyse die Riesel- oder Sumpfmethode zur Anwendung kommt. Mit sehr gutem Erfolg kann aber auch mit suspendiertem Katalysator hydriert werden. Die ursprünglich im

Polymerisat enthaltenen färbenden oder Säurezahl verursachenden Verunreinigungen sind ihrer chemischen Natur nach unbekannt und in kaum nachweisbarer Konzentration vorhanden. Deshalb kann auch nicht bestimmt werden, in welcher Weise die erfindungsgemäße Methode auf das Polymerisat einwirkt.

Werden Polytetramethylenether-glykole sehr hohen Molekulargewichts der hydrierenden Reinigung unterworfen, so geschieht das zweckmäßig in einem Lösungsmittel. Geeignete Lösungsmittel sind z. B. Tetrahydrofuran selbst oder z. B. niedere Alkohole, wie Methanol, Ethanol, Propanol und Butanol. Als besonders vorteilhaft hat es sich erwiesen, daß man die Reinigungsstufe unmittelbar an die Polymerisationsstufe anschließen kann. Die Polymerisation läuft von der gewählten Reaktionstemperatur abhängig bis zu einer Gleichgewichtskonzentration ab. Diese liegt z. B. für 40 bis 50 °C bei 50 bis 60 % umgesetztem Tetrahydrofuran. Diese Lösung kann unmittelbar nach Verlassen der Polymerisationszone — ggf. nach Neutralisation des kationischen Katalysators — der Hydrierung zugeführt werden. Nicht umgesetztes Tetrahydrofuran wird anschließend durch Destillation wiedergewonnen und kann nun ohne vorhergehende Reinigung direkt in die Polymerisationsstufe zurückgeführt werden.

Die in den Beispielen genannten Teile sind Gewichtsteile.

## Beispiel 1

Polytetramethylenether-glykol vom Molekulargewicht 2 000, das entsprechend der Deutschen Offenlegungsschrift 2 445 961 (GB-PS 1 512 526) mit Antimonpentachlorid als Katalysator und Essigsäureanhydrid als Reglersubstanz hergestellt und verseift wurde, wird in einem Hubrührautoklaven bei 50 °C und 50 bar Wasserstoff in Gegenwart von 1 Gew.-% Raney-Nickel während 5 Stunden hydriert. Das eingesetzte Polymerisat hatte eine Farbzahl von 70 APHA und eine Säurezahl von 0,08 mg KOH/g. Nach der Hydrierung und Abtrennung des Katalysators durch Filtration erhält man ein Polymerisat, dessen Farbzahl bei 5 APHA liegt und dessen Säurezahl 0 ist.

## Beispiel 2

Wie in der US-PS 3 935 252 beschrieben, wird technisches Tetrahydrofuran der Firma E. I. du Pont de Nemours und Co., USA, mit Fluorsulfonsäure zwischen 25 und 35 °C polymerisiert. Der Polymerisatansatz wird durch Hydrolyse und Behandlung mit Calciumhydroxid, wie in der zitierten Patentanmeldung im Beispiel 4 beschrieben, aufgearbeitet. Es unterbleibt aber die Behandlung mit Aktivkohle. Nach dem Trocknen erhält man ein Polymerisat, das eine Farbzahl von 90 APHA aufweist.

Dieses Polymerisat wird in einem Hubrührautoklaven bei 50 °C und 50 bar Wasserstoff in Gegenwart von 1 % eines Katalysatorpulvers, das aus 0,5 % Platin auf Aluminiumoxid besteht, während 3 Stunden hydriert. Nach Filtration vom Katalysator erhält man ein farbloses Polytetramethylenether-glykol (Farbzahl $< 5$ APHA) ohne Säurezahl.

## Beispiel 3

Tetrahydrofuran wird nach der in der Deutschen Offenlegungsschrift 29 16 653 (US 4 189 566) beschriebenen Methode der kontinuierlichen Polymerisation an Bleicherde als Katalysator und Essigsäureanhydrid als Reglersubstanz polymerisiert. Die in dieser Offenlegungsschrift ebenfalls beschriebene Vorbehandlung zur Reinigung marktgängigen Tetrahydrofurans unterbleibt. Für die Polymerisation wird technisches Tetrahydrofuran der Firma BASF Aktiengesellschaft eingesetzt. Man stellt ein Polytetramethylenether-glykoldiacetat vom Molekulargewicht 650 gemäß der im Beispiel 3 der Offenlegungsschrift mitgeteilten Verfahrensweise her. Dieses Polymerisat besitzt eine Farbzahl von 100 APHA. Wird es durch Hydrolyse in das Polytetramethylenether-glykol überführt, so weist es eine Farbzahl von 110 APHA und eine Säurezahl von 0,05 mg KOH/g auf. Wird das den Reaktor verlassende Polytetramethylenether-glykoldiacetat stattdessen von unten nach oben über ein Katalysatorbett, das aus 3 mm Kieselgelsträngen besteht, die 0,4 % Palladium enthalten, geleitet und dabei Wasserstoff eingegast, so findet eine Entfärbung statt. Das die Hydrierung verlassende Produkt weist nunmehr eine Farbzahl von weniger als 10 APHA auf. Die Katalysatorbelastung beträgt 0,4 kg Polymerisatlösung pro Liter Katalysator und Stunde. Die stündlich eingeleitete Wasserstoffmenge beträgt 1 Nl/l Polymerisatlösung. Wird die hydrierend behandelte Polymerisatlösung vom überschüssigen Tetrahydrofuran befreit und das resultierende Diacetat verseift, so erhält man schließlich ein Polytetramethylenether-glykol mit einer Farbzahl von etwa 15 APHA und einer Säurezahl von 0 mg KOH/g.

**Patentansprüche**

1. Verfahren zur Herstellung von Polytetramethylenetherglykol oder -glykoldiester mit geringer Farbzahl, dadurch gekennzeichnet, daß man die durch kationische Polymerisation von Tetrahydrofuran erhaltenen Polymerisate in Gegenwart eines Hydrierkatalysators einer Behandlung mit Wasserstoff unterwirft.

2. Verfahren nach Anspruch 1, dadurch gekennzeichnet, daß man als Hydrierkatalysator Nickel, Kobalt, Eisen, Ruthenium, Palladium, Platin oder Kupfer verwendet.

## Claims

1. A process for the preparation of polytetramethylene ether glycols or polytetramethylene ether glycol diesters having a low colour number, wherein the polymers obtained by cationic polymerization of tetrahydrofuran are treated with hydrogen in the presence of a hydrogenation catalyst.

2. A process as claimed in claim 1, wherein nickel, cobalt, iron, ruthenium, palladium, platinum or copper is used as the hydrogenation catalyst.

## Revendications

1. Procédé de préparation de polytétraméthylèneétherglycol ou -glycol diester d'assez faible pouvoir colorant, caractérisé par le fait que l'on soumet les polymères obtenus par la polymérisation cationique de tétrahydrofurane à un traitement à l'hydrogène, en présence d'un catalyseur d'hydrogénation.

2. Procédé selon la revendication 1, caractérisé par le fait que l'on utilise, comme catalyseur d'hydrogénation, du nickel, cobalt, fer, ruthénium, palladium, platine ou cuivre.